Europäisches Patentamt

European Patent Office

Office européen des brevets

(19)

(11) Veröffentlichungsnummer: **0 237 853 B1**

# (12) EUROPÄISCHE PATENTSCHRIFT

(45) Veröffentlichungstag der Patentschrift:
17.07.91 Patentblatt 91/29

(51) Int. Cl.⁵ : **F02F 3/00, F02F 3/22**

(21) Anmeldenummer: 87102849.4

(22) Anmeldetag: 27.02.87

(54) **Mehrteiliger Tauchkolben für Verbrennungsmotoren.**

(30) Priorität: 20.03.86 DE 3609447

(43) Veröffentlichungstag der Anmeldung:
23.09.87 Patentblatt 87/39

(45) Bekanntmachung des Hinweises auf die
Patenterteilung:
17.07.91 Patentblatt 91/29

(84) Benannte Vertragsstaaten:
DE FR GB IT

(56) Entgegenhaltungen:
FR-A- 954 188
GB-A- 388 070
US-A- 3 221 718

(73) Patentinhaber: MAHLE GMBH
Pragstrasse 26-46 Postfach 50 07 69
W-7000 Stuttgart 50 (DE)

(72) Erfinder: Fuchs, Reinhold
Bahnhofstrasse 143
W-7012 Fellbach (DE)
Erfinder: Messmer, Dieter
Kochelsee 12
W-7000 Stuttgart 50 (DE)

## Beschreibung

Die Erfindung betrifft einen mehrteiligen Tauchkolben für Verbrennungsmotoren nach dem Oberbegriff des Patentanspruchs 1.

Solche Kolben sind z.B. bekannt aus DE-OS 31 16 475 und DE-OS 29 31 722. Bei diesen Kolben kommt es u.a. wesentlich darauf an, daß der Kolbenboden gut gekühlt werden kann. Eine solche gute Kühlung erreicht man durch das Vorsehen von Kühlkanälen in dem Kolbenkopf, die von Kühlöl laufend durchströmt werden. Zur einfachen Herstellbarkeit solcher geschlossener Kühlkanäle werden diese in die Trennebene zwischen Kolbenboden und Kolbenschaft gelegt. Um eine feste Auflage des Kolbenbodens an dem Kolbenschaft zu erzielen, liegen Kolbenboden und Kolbenschaft über mindestens eine umlaufende Ringfläche aufeinander und werden dort mit Schrauben gegeneinander verspannt.

Hiervon ausgehend liegt der Erfindung die Aufgabe zugrunde, die Auflage zwischen Kolbenboden und Kolbenschaft sowie die Form des Kühlkanals so zu gestalten, daß eine möglichst geringe Kompressionshöhe verwirklichbar ist.

Diese Aufgabe wird durch eine Ausbildung des Kolbens nach den kennzeichnenden Merkmalen des Anspruchs 1 gelöst.

Zweckmäßige Ausgestaltungen enthalter die Unteransprüche.

Zur Ausbildung eines geschlossenen Kühlkanals in einem auf einen Kolbenschaft aufgesetzten Kolbenboden bei der Montage eine den Kühlkanal begrenzende Wand einzusetzen, ist an sich bereits aus US-A 32 21 718 bekannt. Dort ist jedoch eine besondere Befestigung der Begrenzungswand erforderlich, da diese nicht zwischen dem Boden- und Schaftteil des Kolbens einklemmbar ist.

Soweit aus GB-A 388 070 ein Kolben bekannt ist, bei dem der Kolbenboden umfangsmäßig nur über einen Teilbereich auf dem Schaft aufliegt, handelt es sich dort nicht um einen Kühlkanalkolben mit einer einmontierten Kühlkanal-Begrenzungswand, die umfangsmäßig zudem noch zwischen den Auflagebereichen nur an dem Kolbenboden dicht anliegt, während sie in diesem Bereich durch den Schaft ungestützt ist.

Ein Ausführungsbeispiel ist in der Zeichnung dargestellt. Es zeigen

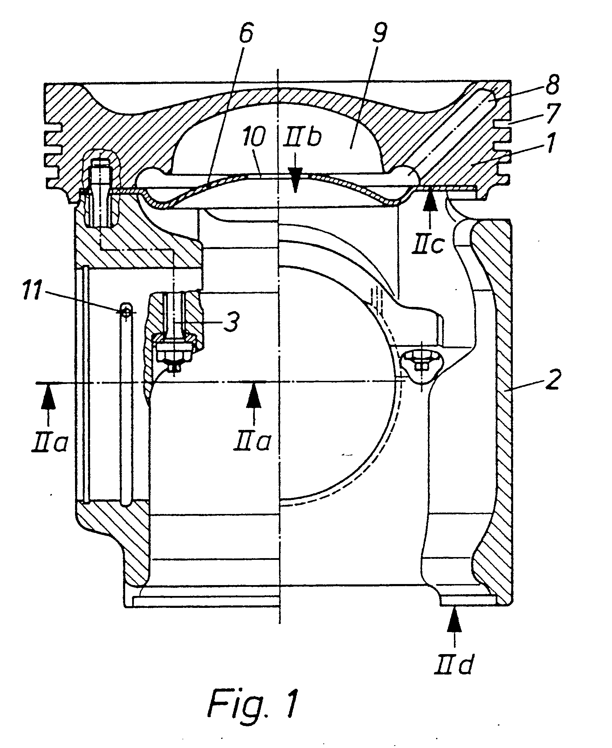

Fig. 1      einen Kolben im Längsschnitt in zwei umfangsmäßig um 90 Grad versetzten Hälften,

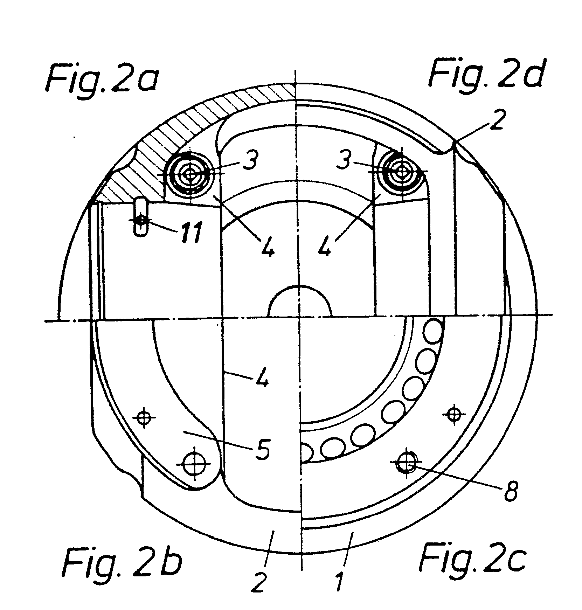

Fig. 2a      einen Schnitt durch ein Viertel des Kolbens nach Linie IIa-IIa
b      die Ansicht auf ein Viertel des Kolbens nach Pfeil IIb
c      die Ansicht eines Viertels des Kolbenbodens in der Ansicht nach Pfeil IIc
d      die Unteransicht eines Viertels des Kolbens nach Fig. 1

Der Kolbenboden 1 ist mit dem Kolbenschaft 2 über vier Dehnschrauben 3 fest verbunden. Der Kolbenboden 1 und der Kolbenschaft 2 liegen lediglich über die zwei im Bereich der Naben 4 des Kolbens liegenden Ringflächenabschnitte 5 aneinander an. Zur Ausbildung eines mit Kühlöl füllbaren Hohlraumes an der Innenfläche des Kolbenbodens 1 ist zwischen Kolbenboden und Kolbenschaft eine als Blech ausgebildete Zwischenwand 6 vorgesehen. Diese Zwischenwand ist an ihrem Umfang an den Ringflächenabschnitten 5 zwischen Kolbenboden und Kolbenschaft eingespannt. Umfangsmäßig außerhalb der Ringflächenabschnitte 5 liegt die Zwischenwand 6 ebenfalls dicht am radial außen liegenden Bereich der Kolbenbodenunterseite an. Bei dem massiv ausgebildeten Kolbenboden 1 sind in dem Bereich hinter den Kolbenringnuten 7 von der Kolbenbodeninnenfläche ausgehende sich radial nach außen erstreckende Sacklochbohrungen 8 angebracht. Diese Sacklochbohrungen 8 stehen mit dem von der Zwischenwand 6 in dem Kolbenboden 1 gebildeten Hohlraum 9 in Verbindung. Damit der Hohlraum 9 von Kühlöl durchflossen werden kann, sind Zu- und Abflußöffnungen vorgesehen. Eine Abflußöffnung 10 befindet sich etwa in Achsrichtung des Kolbens. In den Hohlraum 9 eingeführt wird das Kühlöl von den Bohrungen der Naben 4 aus über einen Kanal 11, der durch die Zwischenwand 6 hindurch in einer der Sacklochbohrungen 8 mündet. Da die Sacklochbohrungen 8 mit dem Hohlraum 9 verbunden sind, sind auch sie mit Kühlöl beaufschlagt, das den Hohlraum 9 durchströmt.

Der besondere Vorteil dieser erfindungsgemäßen Kolbenausführung besteht darin, daß durch die lediglich im Bereich der Naben 4 erfolgende Abstützung zwischen Kolbenboden und Kolbenschaft der sich im Kolbeninnenraum in Druck- Gegendruckrichtung erstreckende Raum voll zur Aufnahme des in der Zeichnung nicht dargestellten Pleuelkopfes verbleibt. Durch die Ausbildung des für das Kühlöl erforderlichen Hohlraumes durch Einbringen einer losen lediglich in den Auflageflächen zwischen Kolbenboden und Kolbenschaft eingespannten Zwischenwand lassen sich die einzelnen Kolbenteile besonders einfach und wirtschaftlich herstellen. Zudem kann die Zwischenwand 6 als Blech ausgebildet sein und nimmt damit nur sehr wenig Raum ein, was wiederum dem Ziel, eine möglischt niedrige Kompressionshöhe zu erhalten, zugute kommt.

**Patentansprüche**

1. Mehrteiliger Tauchkolben für Verbrennungsmotoren mit einem den Kolbenbolzen aufnehmenden Kolbenschaft und einem sämtliche Kolbenringnuten enthaltenden Kolbenboden, wobei diese beiden Teile in Höhe der oberhalb der Bolzenaufnahme liegenden Kolbenringnnuten aneinanderliegen und über Schrauben miteinander verspannt sind und bei dem in dem Kolbenboden Hohlräume für durchfließendes Kühlöl vorhanden sind, **gekennzeichnet** durch die Merkmale :

(a) der Kolbenschaft (2) liegt an dem Kolbenboden (1) ausschließlich über zwei Ringflächenabschitte (5) an,

(b) jeder dieser beiden Ringflächenabschnitte (5) erstreckt sich umfangsmäßig etwa über den von den Bolzennaben (4) im Kolbenschaft (2) eingenommenen Bereich,

(c) die von den Ringflächenabschnitten (5) gebildeten Auflageflächen zwischen Kolbenboden (1) und Kolbenschaft (2) verlaufen ausschließlich radial seitlich der den Seitenflanken des an dem Kolbenbolzen angelenkten Pleuelkopfes benachbarten Bolzennaben- (4) grenzflächen,

(d) radial innerhalb der Auflageflächenbereiche von Kolbenboden (1) und Kolbenschaft (2) ist die Kolbenboden- (1) innenfläche konkav gewölbt und zwischen den Ringflächenabschnitten (5) als Auflagefläche ist eine den konkav gewölbten Abschnitt des Kolbenbodens (1) mit Abstand über den gesamten Umfang abdeckende Zwischenwand (6) eingespannt, wobei der zwischen Zwischenwand (6) und Kolbenboden- (1) innenfläche ausgebildete geschlossene Hohlraum (9) mit wenigstens einer Zu-und Abflußöffnung (10 bzw. 11) für hindurchzuführendes Kühlöl versehen ist.

2. Tauchkolben nach Anspruch 1, dadurch **gekennzeichnet**, daß die ausschließlich in den Naben (4)-bereichen liegenden Ringflächenabschnitte (5) jeweils bis direkt an die den Seitenflanken des Pleuels benachbarten Bolzennaben (4)-grenzflächen radial und umfangsmäßig heranreichen.

3. Tauchkolben nach einem der vorhergehenden Ansprüche, dadurch **gekennzeichnet**, daß Kolbenboden (1) und Kolbenschaft (2) über insgesamt vier Schrauben (3) miteinander verspannt sind, die jeweils direkt neben der Bohrung der Naben (4) angreifen.

4. Tauchkolben nach einem der vorhergehenden Ansprüche, dadurch **gekennzeichnet**, daß in dem Bereich hinter den Kolbenringnuten (7) etwa radial verlaufende Sacklochbohrungen (8) in den von der Zwischenwand 6 gebildeten Hohlraum 9 hineinragen.

**Revendications**

1. Piston à éléments multiples pour moteurs à combustion interne, comprenant une tige de piston recevant l'axe de piston, et un fond de piston contenant la totalité des gorges annulaires du piston, ces deux éléments étant appliqués l'un contre l'autre au niveau des gorges annulaires du piston situées au-dessus du logement de boulon et bloqués l'un contre l'autre par l'intermédiaire de boulons, et pour lequel des cavités pour la circulation d'huile de refroidissement sont ménagées dans le fond de piston, **caractérisé** en ce que

(a) la tige de piston (2) est exclusivement appliquée contre le fond de piston (1) par l'intermédiaire de deux segments de surface annulaire (5),

(b) chacun de ces deux segments de surface annulaire (5) s'étend dans le sens circonférentiel approximativement sur la zone occupée par les moyeux de boulons (4) dans la tige de piston (2),

(c) les surfaces d'appui entre le fond de piston (1) et la tige de piston (2) formées par les segments de surface annulaire (5) s'étendent exclusivement dans le sens radial sur le côté des surfaces extérieures des moyeux (4) qui avoisinent les flancs latéraux de la tête de bielle articulée sur l'axe de piston,

(d) radialement à l'intérieur des zones de surface d'appui du fond de piston (1) et de la tige de piston (2), la surface intérieure du fond de piston (1) présente une courbure concave, et qu'entre les segments de surface annulaire (5) en tant que surface d'appui est insérée une cloison (6) qui recouvre la section à courbure concave du fond de piston (1) à distance sur toute la circonférence, la cavité (9) conformée entre la cloison (6) et la surface intérieure du fond de piston (1) étant munie d'au moins un orifice d'entrée et de sortie (10 et respectivement 11) pour la circulation de l'huile de refroidissement.

2. Piston selon la revendication 1, caractérisé en ce que les segments de surface annulaire (5) situés exclusivement dans la région des moyeux (4) s'étendent respectivement, dans les sens radial et circonférentiel, jusqu'à proximité immédiate'des surfaces extérieures des moyeux de boulons (4) qui avoisinent les flancs latéraux de la bielle.

3. Piston selon l'une des revendications précédentes, caractérisé en ce que le fond de piston (1) et la tige de piston (2) sont solidarisés par l'intermédiaire d'un total de quatre boulons (3) qui agissent à chaque fois immédiatement à côté de l'alésage des moyeux (4).

4. Piston selon l'une des revendications précédentes, caractérisé en ce que dans la région située derrière les gorges annulaires du piston (7) des trous borgnes (8) d'extension sensiblement radiale dépassent dans la cavité (9) formée par la cloison (6).

## Claims

1. A multi-part plunger piston for internal combustion engines with a piston skirt accommodating the gudgeon pin and a piston crown containing all the piston ring grooves, these two parts bearing one on the other at the height of the piston ring grooves which are disposed above the gudgeon pin seating and being clamped together by screws and in which cavities are provided in the piston crown for a through-flow of cooling oil, characterised by the following features :

(a)     the piston skirt (2) only bears on the piston crown (1) through two annular surface portions (5),

(b)     each of these two annular surface portions (5) extends peripherally and substantially over the area occupied by the gudgeon pin boss (4) in the piston skirt (2),

(c)     the supporting surfaces formed between piston crown (1) and piston skirt (2) by the annular surface portions (5) extend only radially laterally of the gudgeon pin boss (4) boundary surfaces adjacent the lateral flanks of the connecting rod head which is articulated on the gudgeon pin,

(d)     radially within the supporting surface zones of piston crown (1) and piston skirt (2), the inner surface of the piston crown (1) is concavely curved and between the annular surface portions (5), to serve as a supporting surface, there is clamped an intermediate wall (6) which, at a distance, masks the entire periphery of the concavely curved portion of the piston crown (1), the cavity (9) enclosed between the intermediate wall (6) and the inner surface of the piston crown (1) being provided with at least one feed inlet and discharge orifice (10, 11) for cooling oil which is to be passed through the piston.

2. A plunger piston according to Claim 1, characterised in that the annular surface portions (5) disposed solely in the boss zones (4) extend in each radially and peripherally to a point directly on the gudgeon pin boss (4) boundary surfaces which are adjacent the lateral flanks of the connecting rod.

3. A plunger piston according to one of the preceding Claims, characterised in that piston crown (1) and piston skirt (2) are clamped to each other by a total of four screws (3) which in each case engage directly alongside the bore in the boss (4).

4. A plunger piston according to one of the preceding Claims, characterised in that in the area behind the piston ring grooves (7), substantially radially extending blind bores (8) project into the cavity (9) formed by the intermediate wall (6).

*Fig. 1*

Fig.2a

Fig.2d

Fig. 2b

Fig.2c